# EUROPEAN PATENT APPLICATION

(11) **EP 2 239 529 A2**
(43) Date of publication of application: **13.10.2010**
(21) Application number: 10158656.8
(22) Date of filing: 31.03.2010
(51) Int. Cl.: F28D 1/02, F28F 7/02

(54) **Modular element for a surface heating system**

(30) Priority: 03.04.2009 IT TO20090258
(71) Applicant: C.G.M. S.r.l., 12030 Monasterolo di Savigliano CN (IT)
(72) Inventor: Massimino, Gianpiero, 12038 Savigliano (Cuneo) (IT)
(74) Representative: Rondano, Davide

(57) **Abstract**

The modular element (10) comprises a first body (12) of thermally conductive material integrally forming a plate element (14) and a plurality of conduits (16) arranged on one side of the plate element (14) and intended in use to be flowed through by a heat transfer fluid to exchange heat with the plate element (14), and a second body (18) of thermally insulating material having, on a face thereof (20) facing towards the first body (12), a plurality of channels (22) opening towards the first body (12). The first body (12) rests on the second body (18), the plate element (14) being in contact with said face (20) of the second body (18) and each conduit (16) being accommodated in a respective channel (22) of the second body (18).

## Description

The present invention refers to a modular element for a surface heating system, particularly but not exclusively for heating of floors, side walls or ceilings of houses or offices, or of floors of civil, religious or industrial buildings, or of floors of sport facilities, such as sports halls or gyms, or of terraces of sport facilities, or again of grounds of greenhouses or nurseries, as specified in the preamble of claim 1.

Traditionally, the surfaces of rooms, in particular the floors of domestic rooms, are heated by means of conduits laid below the floors, which floors may be not only tiled floors but also wood-block floors, and by means of hot water flowing within those conduits. Such a known solution is however affected by a number of drawbacks, first of all the low efficiency, which requires water at a very high temperature to flow within the conduits to obtain a sufficient level of heating. The need to use very hot water clearly involves the disadvantage of increasing the operating costs of the heating system, as well as, in case of wood-block floors, of causing in the long run damages to the wood of the floor.

A floor heating system is also known which comprises a plurality of modular elements consisting of radiating panels intended to be releasably installed above the floor to heat treadable surfaces, for instance of buildings of historical and artistic importance, of meeting and show rooms, or in any case of very large spaces. Each radiating panel comprises a support body of aluminium with a honeycomb structure, a plurality of coils of copper arranged inside the support body for allowing circulation of hot water coming from a heat source, such as for instance a gas condensing boiler, and an outer cover placed on the upper face of the support body and having an outer surface simulating the appearance for instance of the wood. Such a known solution is however affected by the drawback of the high cost, due to the need to adopt a honeycomb structure for the support body, a structure of this type being necessary both to provide the panel with the required stiffness, in particular when this latter has to be used to heat a treadable surface, and to ensure an adequate heat transmission and hence a high energy efficiency.

A modular element for a surface heating system according to the preamble of independent claim 1 is known from DE3919515 and comprises a heating body with a block in which parallel cylindrical channels are provided and with a plate element which is made in a single piece with the block, preferably by extrusion of an aluminium alloy. The heating body may be secured to a wall by means of a support element, in which case an insulating body is interposed between the support element and the wall and has a pair of cavities accommodating conduits which are separate from those formed by the heating body. The heating body known from this prior art document is not able to provide a treadable surface, and therefore cannot be used in a floor heating system, due to the deformability of the side wings of the flat plate element which extend in a cantilevered manner from the block without being supported by the insulating body. Moreover, the channels of the heating body are not accommodated in the cavities of the insulating body, but extend wholly, or almost wholly, beyond the face of the insulating body facing towards the heating body, with resulting increase in the vertical size of the modular element. Moreover, a free space is provided between the plate element and the insulating body, and therefore part of the heat transmitted to the heating body by the hot water flowing in the channels of the block of the heating body is dispersed in air, instead of being transmitted to the surface to be heated.

It is therefore an object of the present invention to provide a modular element for a surface heating system which makes it possible to meet at the same time the requirements for high energy efficiency, and hence low operating costs, and for low manufacturing costs, and which also has reduced sizes in a direction perpendicular to the plate element, i.e. in a direction perpendicular to the surface to be heated.

This and other objects are fully achieved according to the present invention by virtue of a modular element for a surface heating system having the features set forth in the characterizing portion of the enclosed independent claim 1.

Further advantageous features of the invention are specified in the dependent claims, the content of which is to be intended as integral and integrating part of the present description.

By virtue of the conductive body resting on the insulating body in such a manner that on the one hand the plate element is in contact with the face of the insulating body facing towards the conductive body and on the other hand the conduits of the conductive body are accommodated each in a respective channel of the insulating body, there is substantially no free space between the conductive body and the insulating body and therefore the energy efficiency of the modular element is maximized. The modular element according to the invention also has reduced sizes in a direction perpendicular to the modular element (vertical direction, in case of a modular element for a floor or ground heating system), which results in advantages in terms of easiness of installation and costs.

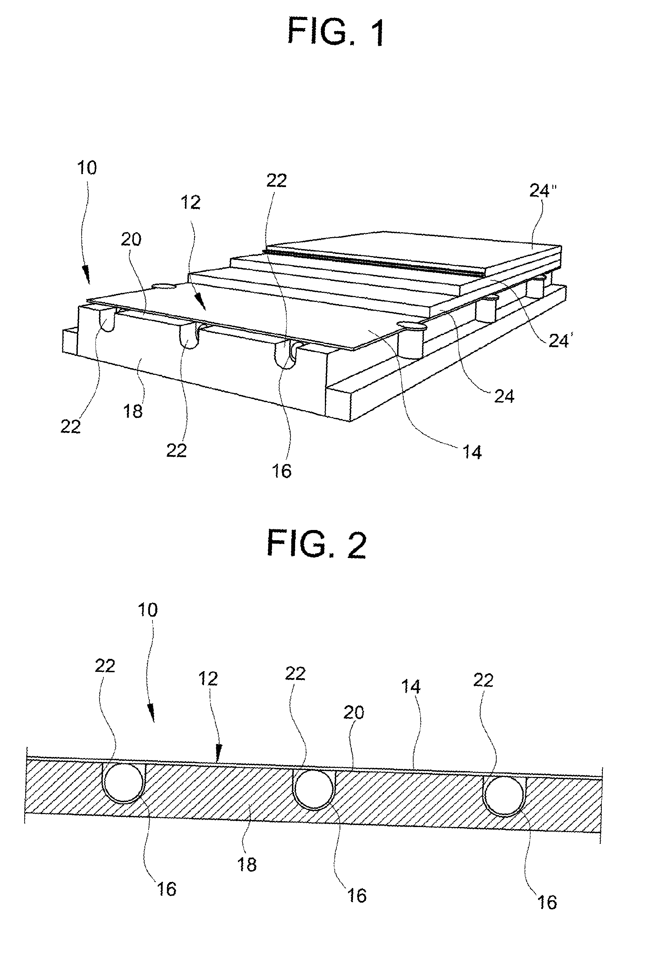

Further features and advantages of the present invention will become apparent from the following detailed description, given purely by way of non-limiting example with reference to the appended drawings, in which Figure 1 and Figure 2 are a perspective view and a front elevation view, respectively, of a modular element for a surface heating system according to a preferred embodiment of the invention.

With reference to the drawings, a modular element for a surface heating system, in the illustrated example a floor heating system, according to a preferred embodiment of the present invention is generally indicated 10 and basically includes:
- a first body 12 (hereinafter referred to as conductive body) made of a thermally conductive material, preferably of metal, and integrally forming a plate element 14, pref erably a flat element of rectangular or square shape, and a plurality of conduits 16 which extend downwards with respect to the plate element 14 and run parallel to each other, pref erably parallel to the direction of one of the sides of the rectangular or square shape of the plate element 14; and
- a second body 18 (hereinafter referred to as insulating body) made of a thermally insulating material, for instance of polyurethane, wherein on a face 20 of this body (upper face relative to the point of view of the observer of Figures 1 and 2) facing towards the conductive body 12 a plurality of channels 22 are provided which open onto the conductive body 12 (upwards, with respect to the point of view of the observer of Figures 1 and 2).

The conductive body 12 rests on the insulating body 18, with the plate element 14 in contact with the face 20 and with each of the conduits 16 accommodated in a respective channel 22. The insulating body 18 thus fills substantially the whole space below the conductive body 12, with no free spaces between the two bodies through which part of the heat exchanged between the conductive body 12 and a heat transfer fluid (typically water) flowing in the conduits 16 may be dispersed. The conductive body 12 is advantageously made of extruded aluminium, which makes it possible to keep the manufacturing costs of the modular element low. Moreover, by virtue of the conduits 16 being made in a single piece with the plate element 14, the heat can be exchanged between the heat transfer fluid flowing in the conduits 16 and the plate element 14 not only by radiation, but also by conduction. The energy efficiency of the modular element is therefore considerably increased with respect to the known solutions in which the heat transmission takes place substantially only by radiation. It is therefore possible to obtain high performances in terms of heating power though keeping the temperature of the heat transfer fluid flowing in the conduits 16 relatively low (for instance in the order of 30÷40°C). The heat transfer fluid may flow directly in the conduits 16 or, alternatively, within tubes (not shown in the drawings) accommodated in the conduits 16. In known manner, the heat transfer fluid will typically be hot water during the winter months when the system works as heating system to heat the associated surface and cold water during the summer months when the system works as cooling system to cool the associated surface.

As far as the insulating body 18 is concerned, its thickness may be varied as desired depending on the specifications required by the application. Advantageously, the face 20 of the insulating body 18 is a flat face, as well as the face of the plate element 14 facing towards the insulating body 18.

Figure 1 further shows a series of covering layers 24, 24', 24" arranged in overlapped relationship on the face of the plate element 14 of the conductive body 12 opposite the one in contact with the insulating body 18. The covering may be of various materials depending on the use of the floor, for instance of wood in case of floors for houses or offices or in case of courts for sports halls, or again of tartan or other synthetic material for fields of sport facilities. Many other applications may of course be conceived due to the extraordinary easiness of installation of the modular element according to the present invention. For instance, the modular element may be used to heat so called floating or suspended floors for offices. Moreover, the modular element may be used also to heat non-treadable surfaces, for instance to heat a wall or a ceiling, as well as to heat seating surfaces, such as for instance terraces of sport facilities.

Naturally, the principle of the invention remaining unchanged, the embodiments and manufacturing details may be widely varied with respect to those described and illustrated purely by way of non-limiting example.

## Claims

1. Modular element (10) for a surface heating system, comprising
- a first body (12) of thermally conductive material integrally forming a plate element (14) and a plurality of conduits (16) arranged on one side of the plate element (14) and intended in use to be flowed through by a heat transfer fluid to exchange heat with the plate element (14), and
- a second body (18) of thermally insulating material having, on a face thereof (20) facing towards the first body (12), a plurality of channels (22) opening towards the first body (12),
**characterized in that** the first body (12) rests on the second body (18), the plate element (14) being in contact with said face (20) of the second body (18) and each of the conduits (16) being accommodated in a respective channel (22) of the second body (18).

2. Modular element according to claim 1, wherein the first body (12) is made of aluminium.

3. Modular element according to claim 1 or claim 2, wherein the first body (12) is made by extrusion.

4. Modular element according to any of the preceding claims, wherein the second body (18) is made ofpolyurethane.

5. Modular element according to any of the preceding claims, wherein the plate element (14) is a flat element and wherein said face (20) of the second element (18) is a flat face.

6. Modular element according to claim 5, wherein the plate element (14) is of rectangular or square shape.

7. Modular element according to any of the preceding claims, wherein the conduits (16) and the channels (22) extend parallel to each other.

8. Modular element according to any of the preceding claims, wherein the plate element (14) is substantially wholly in contact with said face (20) of the second body (18).

9. Surface heating system comprising a plurality of modular elements (10) according to any of the preceding claims.
